# EUROPEAN PATENT SPECIFICATION

(11) **EP 4 261 968 B1**
(45) Date of publication and mention of the grant of the patent: **09.12.2026**
(21) Application number: 22880531.3
(22) Date of filing: 24.10.2022
(51) Int. Cl.: H01M 10/04, H01M 10/0583, H01M 50/531, H01M 50/466

(54) **ELECTRODE ASSEMBLY AND BATTERY CELL INCLUDING THE SAME**
ELEKTRODENANORDNUNG UND BATTERIEZELLE DAMIT
ENSEMBLE ÉLECTRODE ET ÉLÉMENT DE BATTERIE LE COMPRENANT

(43) Date of publication of application: 18.10.2023
(73) Proprietor: LG Energy Solution, Ltd., Seoul 07335 (KR)
(72) Inventor: JU, Jeonghun, Daejeon 34122 (KR); KIM, Hyoung Kwon, Daejeon 34122 (KR)
(74) Representative: Plasseraud IP
(86) International application number: PCT/IB2022/060187
(87) International publication number: WO 2023/062613

(56) References cited:
- CN-A- 102 664 285
- JP-A- 2016 115 471
- KR-A- 20150 137 077
- KR-A- 20160 088 303
- KR-A- 20180 085 781
- KR-B1- 101 551 912

## Description

### [TECHNICAL FIELD]

### Cross Citation with Related Application(s)

This application claims the benefit of Korean Patent Application No. 10-2021-0137261 filed on October 15, 2021.

The present disclosure relates to an electrode assembly and a battery cell including the same, and more particularly to an electrode assembly having a novel laminated structure and a battery cell including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, being freely charged and discharged, and having very low self-discharge rate and high energy density.

The secondary battery may be classified, based on the shape of a battery case, into a cylindrical or prismatic battery wherein an electrode assembly is built into a cylindrical or prismatic metal can, and a pouch-type battery in which the electrode assembly is built into a pouch-shaped case made of a stacked aluminum sheet.

Further, the secondary battery may be classified, based on the structure of an electrode assembly having a structure in which a positive electrode and a negative electrode are stacked with a separator being interposed between the positive electrode and the negative electrode. Typically, there may be mentioned a jelly-roll (wound) type structure in which long sheet-type positive and negative electrodes are wound with a separator interposed therebetween, a stacked (laminated) type structure in which a plurality of positive and negative electrodes cut to a predetermined unit size are stacked in a sequential order with separators interposed therebetween, or the like. In recent years, in order to solve problems caused by the jelly-roll type electrode assembly and the stacked type electrode assembly, there has been developed a stacked/bent type electrode assembly, which is a combination of the jelly-roll type electrode assembly and the stacked type electrode assembly.

Meanwhile, when a stack/folding type electrode assembly is preparing, a winding-stack folding and a zigzag-stack folding methods are mainly used, wherein such a stack/folding type electrode assembly connects multiple sheet-type electrodes in a parallel structure, which has a great advantage in terms of output. Typically, the stack/folding type electrode assembly is formed by stacking single sheet-type electrodes cut through a notching process, wherein the direction of the electrode tab is fixed and joined in one direction.

Conventionally, in order to improve the output characteristics of the stack/folding type electrode assembly and achieve process simplification, a structure in which electrode tabs are arranged in multiple directions or a process of stacking the electrodes without cutting them has also been devised.

In this regard, Patent Literature 1 discloses that a plurality of electrode tabs are arranged in multiple directions on each electrode in order to configure electrode tabs suitable for high-current use. However, such an electrode structure merely stacks single sheet-type electrodes in which electrode tabs are arranged in different directions, whereby a continuous process is impossible, and the stacked electrodes are not connected, which causes a problem that a separate additional process is required.

In addition, Patent Literature 2 discloses an electrode assembly that connects two electrodes arranged in the form of a zigzag fold, thereby simplifying the electrode process, minimizing structural changes, and capable of using for a high-power battery cell. However, the electrode assembly of Patent Literature 2 has drawbacks in that one surface of the electrode is composed entirely of the non-coating portion, resulting in high material loss and not forming at least one electrode tab in both directions.

### [Prior Art Literature]

Patent Literature 1: Korean Unexamined Patent Publication No. 10-2010-0135382 (December 27, 2010)
Patent Literature 2: Korean Unexamined Patent Publication No. 10-2016-0088303 (July 25, 2016)
Patent Literature 3: Chinese Patent Publication No. 102 664 285 A (September 12, 2012)
Patent Literature 3 discloses an electrode assembly with two zig-zag shaped electrodes and a separator.

### [DETAILED DESCRIPTION OF THE INVENTION]

### [Technical Problem]

It is an object of the present disclosure to provide an electrode assembly that is improved in processability and is usable under a high-power environment, and a battery cell including the same.

However, the problem to be solved by embodiments of the present disclosure is not limited to the above-described problems, and can be variously expanded within the scope of the technical idea included in the present disclosure.

### [Technical Solution]

According to the present invention, there is provided an electrode assembly as defined in the appended set of claims, the electrode assembly comprises a positive electrode, a negative electrode and a separator, wherein the positive electrode and the negative electrode comprises a coating portion coated with an electrode active material and a non-coating portion not coated with an electrode active material, wherein one electrode of the positive electrode and the negative electrode has a zigzag shape formed by bending a rectangular sheet in which the coating portion and the non-coating portion are alternately formed, wherein another electrode of the positive electrode and the negative electrode has a folder shape formed by bending a sheet in which two coating portions are formed with one non-coating portion interposed therebetween, wherein the electrode tabs of the zigzag-shaped electrodes are formed in both directions, and wherein the electrode tabs of the folder-shaped electrodes are formed in one direction and arranged perpendicular to the electrode tabs formed in both directions.

Also, the separator may have a zigzag shape formed by bending a long separator sheet in accordance with a predetermined unit length.

The zigzag-shaped electrode and separator have a folding line formed by being bent, the folding line of the zigzag-shaped electrode is formed on the non-coating portion, and the folding line of the zigzag-shaped electrode may be arranged perpendicular to the folding line of the separator.

The folding line formed on the folder-shaped electrode may be arranged parallel to the folding line of the separator.

Two unit separators are located between the two coating portions of the zigzag-shaped electrode, and two other unit separators are located between the other two coating portions of the zigzag-bent electrode, one of the two coating portions of the folder-shaped electrode is located between the two unit separators, and the other of the two coating portions of the folder-shaped electrode may be located between the other two unit separators.

The coating portion has a long side facing each other and a short side facing each other, the non-coating portion of the zigzag-shaped electrode is located between the long sides of the coating portion, and the non-coating portion of the folder-shaped electrode may be located between short sides of the coating portion.

The coating portion has a long side facing each other and a short side facing each other, and the non-coating portion of the zigzag-shaped electrode may be located between the long sides of the coating portion.

The bent portion of the separator may be located between short sides of the separator.

The zigzag-shaped electrode may be a positive electrode.

The folder-shaped electrode may be a negative electrode.

The coating portion of the electrode may be formed on both surfaces.

According to the present invention, there is provided a battery cell as defined in the appended set of claims, which comprises the above-mentioned electrode assembly.

### [BRIEF DESCRIPTION OF THE DRAWINGS]

Figs. 1 and 2 are diagrams showing an electrode assembly according to one embodiment of the present disclosure;
Fig. 3 is a diagram showing a state before the first electrode included in Fig. 1 is folded;
Fig. 4 is a diagram showing a state before the second electrode included in Fig. 1 is folded;
Fig. 5 is a diagram showing a state before the separator included in Fig. 1 is folded;
Fig. 6 is a diagram showing a process in which the first electrode and the separator of Fig. 1 are combined;
Fig. 7 is another diagram showing a process in which the first electrode and the separator of Fig. 1 are combined;
Fig. 8 is a diagram showing one side surface of a stack in which the first electrode and the separator of Fig. 1 are combined;
Fig. 9 is a diagram showing a process in which the first electrode, the separator, and the second electrode of Fig. 1 are combined;
Fig. 10 is a diagram showing one side and the other side of an electrode assembly according to one embodiment of the present disclosure;
Fig. 11 is another diagram showing one side and the other side of an electrode assembly according to one embodiment of the present disclosure; and
Fig. 12 is a flowchart of a method of manufacturing an electrode assembly according to one embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of a part and an area are exaggeratedly illustrated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity. Meanwhile, similar to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

Hereinafter, an electrode assembly according to one embodiment of the present disclosure will be described.

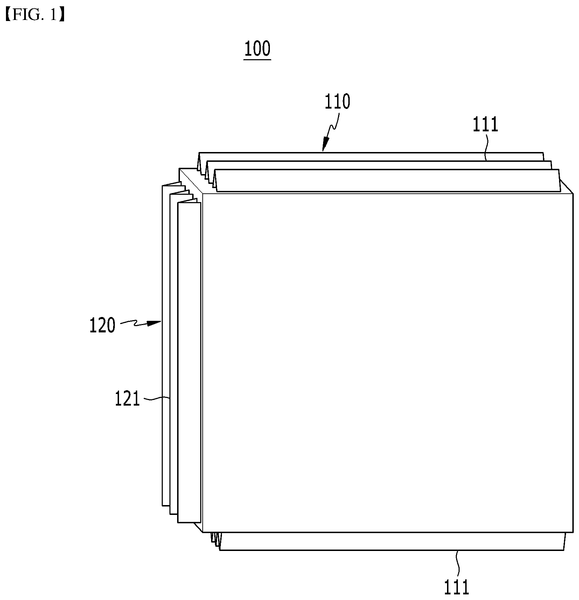

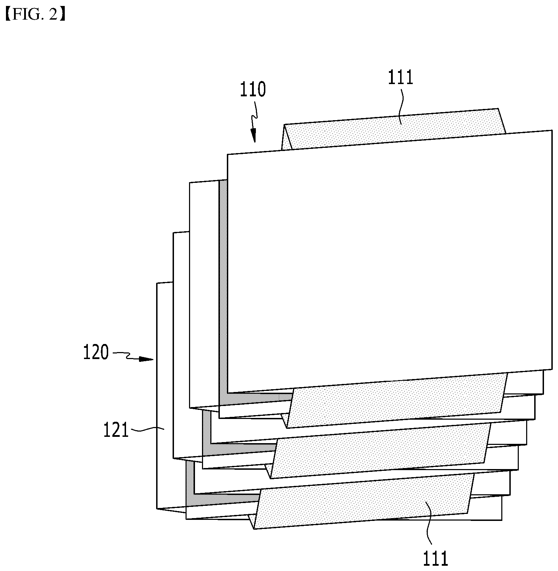

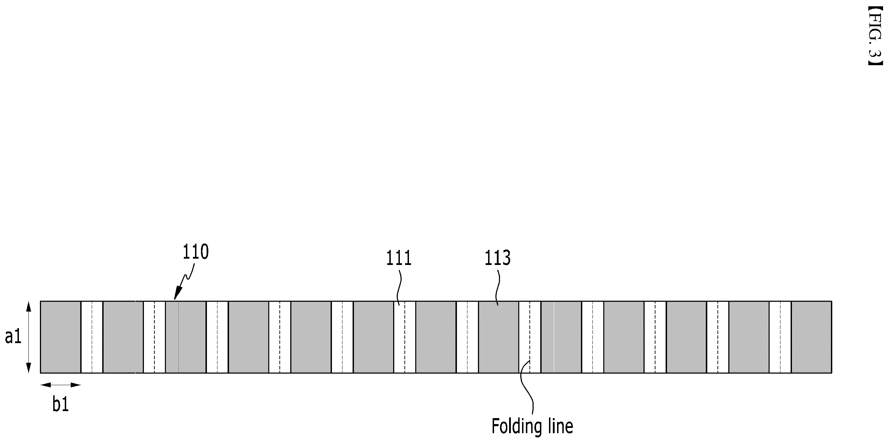

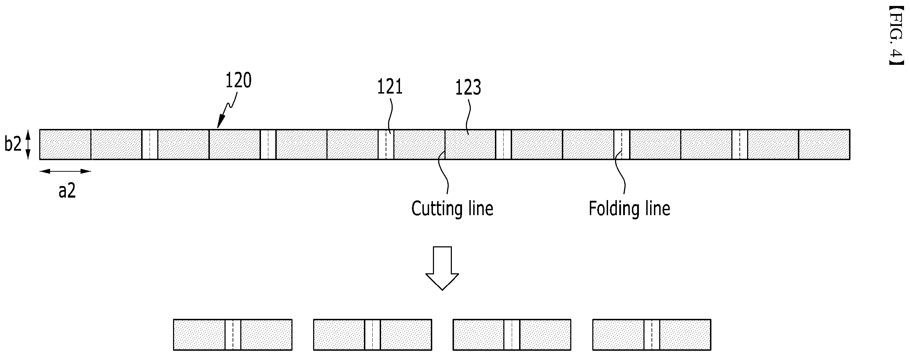

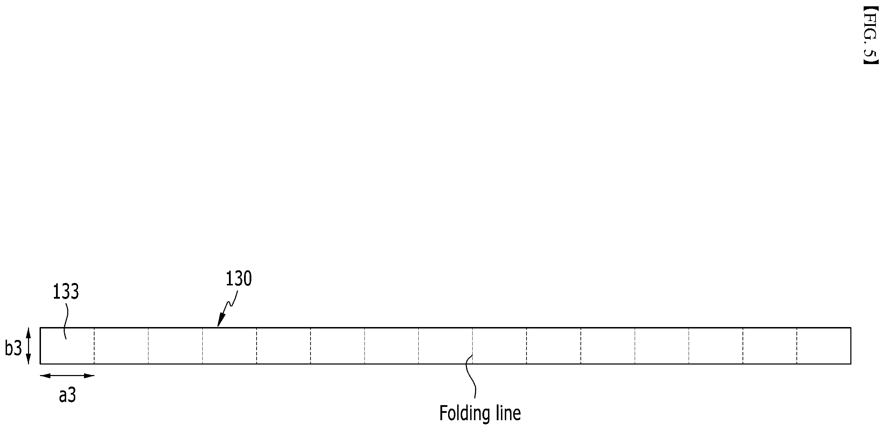

Figs. 1 and 2 are diagrams showing an electrode assembly according to one embodiment of the present disclosure. Fig. 3 is a diagram showing a state before the first electrode included in Fig. 1 is folded. Fig. 4 is a diagram showing a state before the second electrode included in Fig. 1 is folded. Fig. 5 is a diagram showing a state before the separator included in Fig. 1 is folded.

Referring to Figs. 1 and 2, the electrode assembly 100 of the present embodiment may be a chargeable/dischargeable power generating element. The electrodes included in the electrode assembly 100 may include a first electrode 110 and a second electrode 120, and a separator 130 is interposed between the electrodes, so that the electrode assembly 100 can have a structure in which the first electrode 110 / the separator 130 / the second electrode 120 are alternately stacked. Here, the first electrode 110 may be a positive electrode, and the second electrode 120 may be a negative electrode. However, this is not necessarily the case, and in accordance with a design, the first electrode 110 may be a negative electrode and the second electrode 120 may be a positive electrode.

A first non-coating portion 111 and a second non-coating portion 121 that are parts of the first electrode 110 or the second electrode 120 may be located at the edge of the electrode assembly 100. The first non-coating portion 111 and the second non-coating portion 121 are electrode tabs of the first electrode 110 and the second electrode 120.

As shown in Figs. 1 and 2, in the electrode assembly 100 of the present embodiment, the electrode tabs of the first electrode 110 are formed in both directions. Also, the electrode tab of the second electrode 120 is formed in one direction. The electrode tab of the first electrode 110 and the electrode tab of the second electrode 120 are located perpendicular to each other.

Referring to Fig. 3, the first electrode 110 of the present embodiment may be coated with an active material on a current collector. The first electrode 110 may include a first coating portion 113 coated with an active material and a first non-coating portion 111 that is a plain portion not coated with an active material. Here, the first coating portion 113 may be formed on both surfaces.

The first electrode 110 may be provided as a rectangular sheet in which a plurality of first coating portions 113 and first non-coating portions 111 are alternately located. The sheet-shaped first electrode 110 is folded along a folding line, and thus can be formed in a zigzag shape. Specifically, when the first electrode 110 has an upper surface and a lower surface, two adjacent first coating portions 113 may be overlapped by bringing their lower surfaces into contact with each other.

The first coating portion 113 may be prepared in unit sizes according to the design of the electrode assembly 100. The first coating portion 113 may have a long side a1 facing each other and a short side b1 facing each other. The first non-coating portion 111 may be located between the long sides a1 of the two adjacent first coating portions 113. The folding line is formed on the first non-coating portion 111 and may correspond to the long side a1. The folding line may be located parallel to the long side a1. The folding line may be located between the long sides a1 of the two first coating portions 113 facing each other, and the first electrode 110 is folded by the folding line, so that the two first coating portions 113 can be overlapped each other.

Here, the folding line may be formed in advance, but may also be formed by folding the first electrode 110 in a zigzag shape during the process of forming the electrode assembly 100. In Fig. 3, "the folding line is indicated on the rectangular sheet-shaped first electrode 110" is for explaining the first electrode 110 formed in a zigzag shape. Therefore, it should be noted in advance that the folding line does not necessarily have to be formed in advance. In addition, these contents may be equally applied to the second electrode 120 or the separator 130.

Also, here, when the folding line is formed by folding the first electrode 110 in a zigzag shape, the folding line may be formed to be slightly included differently from that shown. Therefore, "the folding line corresponds to or is parallel to a specific side or other folding line" herein is preferably interpreted as including the case where the folding line and a specific side or other folding line form a predetermined angle. In addition, "the folding line is perpendicular to a specific side or other folding line" herein is also preferably interpreted as including the case where a folding line and a specific side or other folding line form a predetermined angle. Here, the predetermined angle may be an angle of 10 degrees (°) or less. These contents are not applied only to the first electrode 110, but can be equally applied to the second electrode 120 or the separator 130.

Referring to Fig. 4, the second electrode 120 of the present embodiment may be coated with an active material on a current collector. The second electrode 120 may include a second coating portion 123 coated with an active material and a second non-coating portion 121 that is a plain portion not coated with the active material. Here, the second coating portion 123 may be coated on both surfaces. At this time, the size of the second coating portion 123 may be larger than that of the first coating portion 113.

The second electrode 120 is provided as a rectangular sheet in which a plurality of second coating portions 123 and second non-coating portions 121 are connected, but may be cut into a predetermined size by a cutting line. At this time, two second coating portions 123 and one second non-coating portion 121 are alternately located on the rectangular electrode sheet, and the cutting line may be formed between two adjacent second coating portions 123 without the second non-coating portion 121.

The second electrode 120 cut by a cutting line may include two second coating portions 123 and one second non-coating portion 121 disposed therebetween. A folding line may be formed on the second non-coating portion 121, and the second electrode 120 may be formed in a folder shape by being folded by the folding line. Here, the folder shape may refer to a folded shape formed by folding once. Specifically, when the second electrode 120 has an upper surface and a lower surface, the cut second electrode 120 may be folded by bringing the upper surfaces of the two second coating portions 123 into contact with each other, or may be folded by bringing the lower surfaces of the second coating portions 123 into contact with each other.

Here, the folding line may be formed in advance, but may be formed by folding the second electrode 120 in a folder shape during the process of forming the electrode assembly 100. Therefore, it should be noted that the folding line does not necessarily have to be formed in advance.

Each of the second coating portions 123 may be prepared into a unit size according to the design of the electrode assembly 100. The second coating portion 123 may have a long side a2 facing each other and a short side b2 facing each other. The long side a2 and the short side b2 of the second coating portion 123 may correspond to the long side a1 and the short side b1 of the first coating portion 113, respectively. The second non-coating portion 121 may be located between short sides b2 of two adjacent second coating portions 123. The cutting line and the folding line may correspond to the short side b2 of the second coating portion 123. The cutting line and the folding line may be parallel to the short side b2 of the second coating portion 123.

Referring to Fig. 5, the separator 130 of the present embodiment is provided in the form of a rectangular sheet, and can be folded by the folding lines to form a zigzag shape. The separator 130 may be made of an insulating material to electrically insulate between the first electrode 110 and the second electrode 120. Here, the separator 130 may be provided as a polyolefin-based resin film, and examples thereof include polyethylene or polypropylene.

The separator 130 may be divided into a plurality of unit separators 133 by being folded. Each unit separator 133 may be prepared into a unit size according to the design of the electrode assembly 100. The size of the unit separator 133 may be constant. The unit separator 133 may have a long side a3 facing each other and a short side b3 facing each other. The long side a3 and short side b3 of the unit separator 133 may correspond to the long side a1 and short side b1 of the first electrode 110 and the long side a2 and short side b2 of the second electrode 120, respectively. Here, the unit separator 133 may be larger than the first coating portion 113 or the second coating portion 123. The long side a3 of the unit separator 133 may be larger than the long side a1 of the first electrode 110 and the long side a2 of the second electrode 120, and the short side b3 of the unit separator 133 may be larger than the short side b1 of the first electrode 110 and the short side b2 of the second electrode 120.

Here, the folding line may correspond to the short side b3. The folding line may be formed parallel to the short side b3 of the unit separator 133. A folding line may be located between the short sides b3 of the two unit separators 133 facing each other, and two unit separators 133 may be overlapped by a folding line. As described above, the folding lines may be formed in advance, but they may also be formed by folding the separator 130 in a zigzag shape.

The separator 130 may be folded in a zigzag shape. Specifically, when the unit separator 133 has an upper surface and a lower surface, two adjacent unit separators 133 are overlapped by bringing their lower surfaces into contact with each other, and the two unit separators 133 adjacent thereto may be overlapped by bringing their upper surfaces into contact with each other.

Meanwhile, in the above description, the first coating portion 113, the second coating portion 123, and the unit separator 130 are all described as having long sides a1, a2, and a3 and short sides b1, b2, and b3, but the first coating portion 113, the second coating portion 123, and the unit separator 130 can be provided in a form in which four sides have the same length.

For example, the first coating portion 113 includes a first side a1 and a second side b1 facing each other, the second coating portion 123 includes a third side a2 and a fourth side b2 facing each other, the unit separator 133 may be described as including a fifth side a3 and a sixth side b3 facing each other. The first side a1 can be explained as having the same or similar length as the second side b1, the third side a2 as the fourth side b2, and the fifth side a3 as the sixth side b3, respectively. In addition, in the electrode assembly 100 of the present embodiment, the first side a1, the third side a2, and the fifth side a3 can be explained as corresponding to each other, and the second side b1, the fourth side b2, and the sixth side b3 can be described as corresponding to each other.

More specifically, the first non-coating portion 111 may be located between the first sides a1 of the first coating portion 113 adjacent to each other, and the first side a1 may be a side corresponding to the folding line of the first electrode 110. The second non-coating portion 121 may be located between the fourth sides b2 of the second coating portion 123 adjacent to each other, and the fourth side b2 may be a side corresponding to the cutting line and the folding line of the second electrode 120. The sixth side b3 of the unit separator 133 may be a side corresponding to the folding line of the separator 130.

Meanwhile, in the above description, for convenience of explanation, the same reference numerals as those used for explaining the long side and the short side are assigned to the first side to the sixth side, but this is merely for explaining the relationship between each side and the non-coating portions 111 and 121 or the relationship between the folding line and the cutting line. Therefore, the lengths and ratios of the first side to the sixth side will not be limited by those shown in the drawings herein.

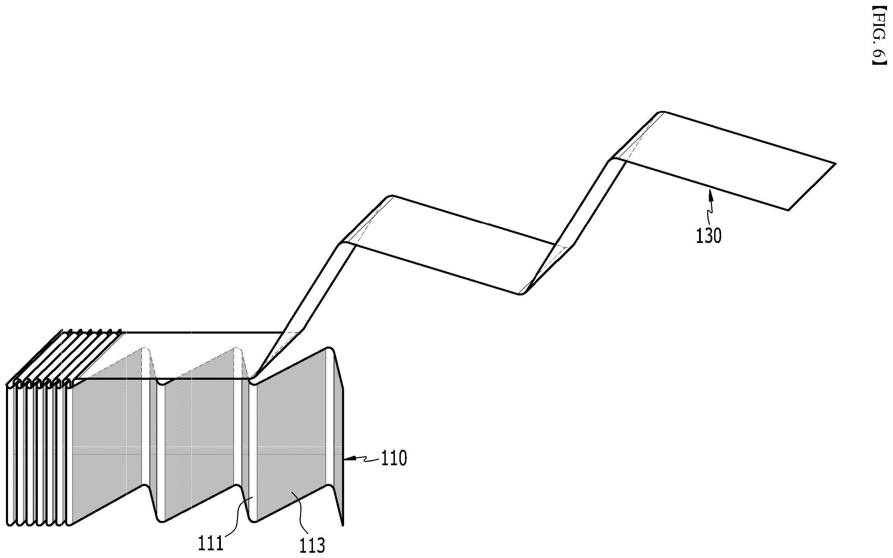

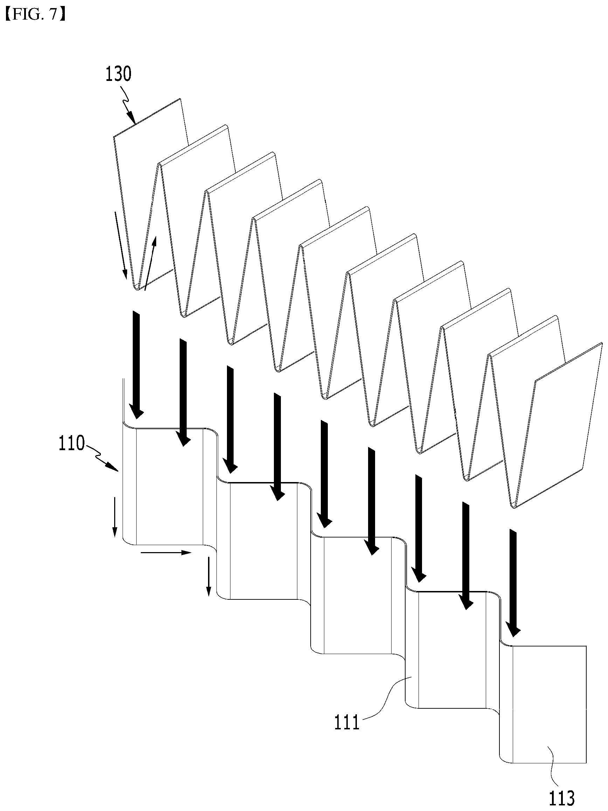

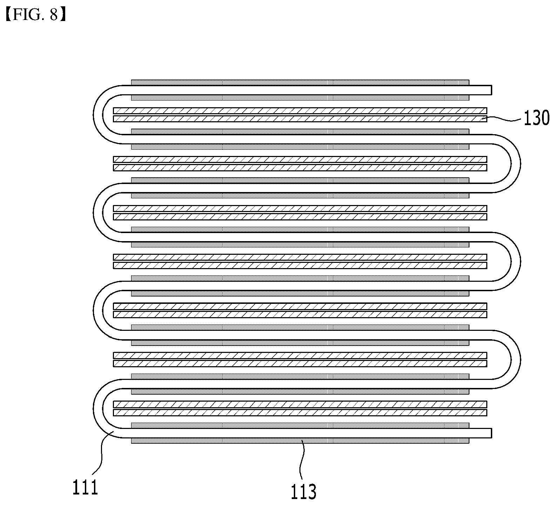

Fig. 6 is a diagram showing a process in which the first electrode and the separator of Fig. 1 are combined. Fig. 7 is another diagram showing a process in which the first electrode and the separator of Fig. 1 are combined. Fig. 8 is a diagram showing one side surface of a stack in which the first electrode and the separator of Fig. 1 are combined.

Referring to Figs, 6 to 8, in the electrode assembly 100 of the present embodiment, the first electrode 110 and the separator 130 can be vertically coupled to each other so that the long side a1 of the first coating portion 113 and the long side a3 of the unit separator 13 correspond to each other, and the short side b1 of the first coating portion 113 and the short side b3 of the unit separator 133 correspond to each other. The folding line of the first electrode 110 and the folding line of the separator 130 may be arranged perpendicular to each other in the electrode assembly 100.

In the vertically coupled first electrode 110 and separator 130, a unit separator 133 may be located between the two first coating portions 113 abutting on each other. At this time, two unit separators 133 may be arranged between the first coating portions 113 facing each other. The two unit separators 133 may be in a folded state such that upper or lower surfaces abut on each other. Accordingly, one surface of each unit separator 133 is in contact with the first coating portion 113, and the other surface may be in contact with the adjacent unit separator 133. Specifically, in the vertically coupled first electrode 110 and separator 130, the first coating portion 113 and the unit separator 133 can be arranged in the order of the first coating portion 113, the unit separator 133, the unit separator 133, the first coating portion 113, the unit separator 133, the unit separator 133, the first coating portion 113... as shown in Fig. 7.

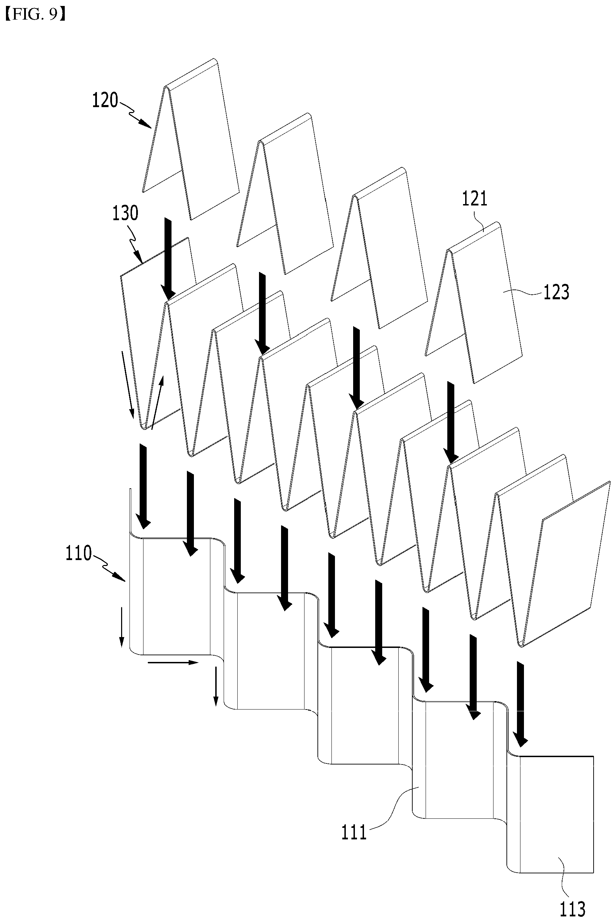

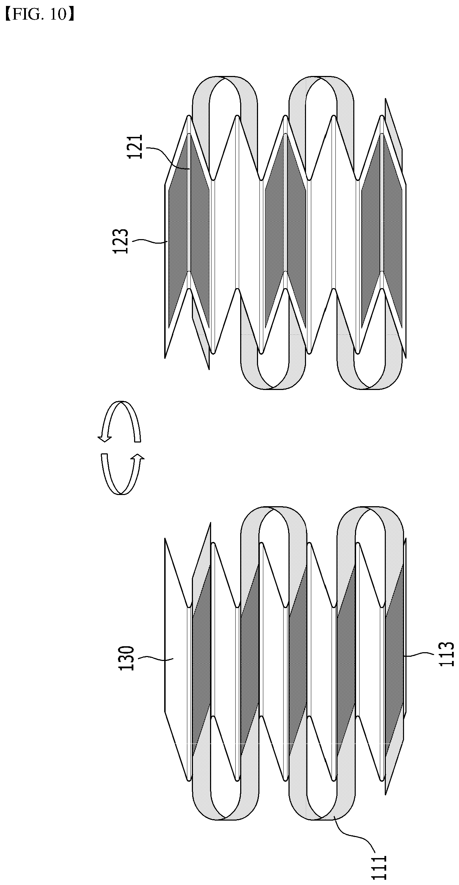

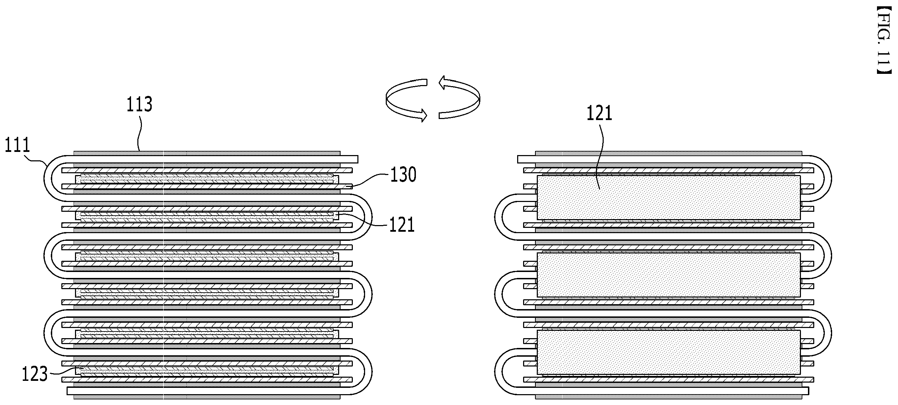

Fig. 9 is a diagram showing a process in which the first electrode, the separator, and the second electrode of Fig. 1 are combined. Fig. 10 is a diagram showing one side and the other side of an electrode assembly according to one embodiment of the present disclosure. Fig. 11 is another diagram showing one side and the other side of an electrode assembly according to one embodiment of the present disclosure. In Fig. 10, it is noted in advance that the shapes of the first coating portion 113 and the second coating portion 123 are omitted for convenience of explanation.

Referring to Figs. 9 to 11, in the assembly of Figs. 6 to 8 mentioned above, the second coating portion 123 of the second electrode 120 can be arranged between two unit separators 133 in contact with each other to form the electrode assembly 100. Since the first coating portion 113 is located between the two unit separators in contact with each other and the other two unit separators in contact with each other, one of the second coating portions 123 of the second electrode 120 is located between the two unit separators in contact with each other, and the other one may be located between two other unit separators in contact with each other.

Specifically, the second electrode 120 may have a folder shape including two second coating portions 123. As shown in Fig. 8 mentioned above, the first coating portion 113 and the unit separator 133 may be stacked in the order of the first coating portion 113, the unit separator 133, the unit separator 133, the first coating portion 113, the unit separator 133, the unit separator 133, and the first coating portion 113. Here, the second coating portion 123 included in the second electrode 120 may be inserted between two unit separators 133 that overlap each other. When the second coating unit 123 is arranged between the two overlapping unit separators 133, the electrode assembly 100 stacked in the order of the first coating portion 113, the unit separator 133, the second coating portion 123, the unit separator 133, the first coating portion 113, the unit separator 133, the second coating portion 123, the unit separator 133 and the first coating portion 113 may be formed.

In the electrode assembly 100, the folding line of the second electrode 120 and the folding line of the first electrode 110 may be arranged perpendicular to each other in the electrode assembly 100. Also, the folding line of the second electrode 120 and the folding line of the separator 130 may be arranged parallel to each other in the electrode assembly 100. The folding line of the second electrode 120 and the folding line of the separator 130 may correspond to each other.

Specifically, the second electrode 120 may be coupled with the first electrode 110 and the separator 130 so that the long side a2 of the second coating portion 123, the long side a1 of the first coating portion 113, and the long side a3 of the unit separator 133 correspond to each other. The second electrode 120 may be coupled with the first electrode 110 and the separator 130 so that the short side b2 of the second coating portion 123, the short side b1 of the first coating portion 113, and the short side b3 of the unit separator 133 correspond to each other.

The second coating portion 123 of the second electrode 120 may be in a state of being connected with the second uncoating portion 121 interposed therebetween. The unit separator 133, the first coating unit 113, and the unit separator 133 are located between the two connected second coating portions 123. Thus, referring to Figs. 10 and 11 showing one surface of the electrode assembly 100 and the other surface which is a surface opposite thereto, the second non-coating 121 may also partially cover one surface of the electrode assembly 100.

The electrode assembly 100 of the present embodiment includes the first electrode 110 having electrode tabs formed in both directions in this way, and thus, can be used in a battery cell that provides high output and high energy. In addition, the first electrode 110, the second electrode 120, and the separator 130 are not cut into unit sizes, thereby capable of simplifying the entire process, and the first coating portion 113 and the second coating portion 123 are connected through the first non-coating portion 111 and the second non-coating portion 121, thereby capable of achieving high output.

Next, a method of manufacturing an electrode assembly according to an embodiment of the present disclosure will be described.

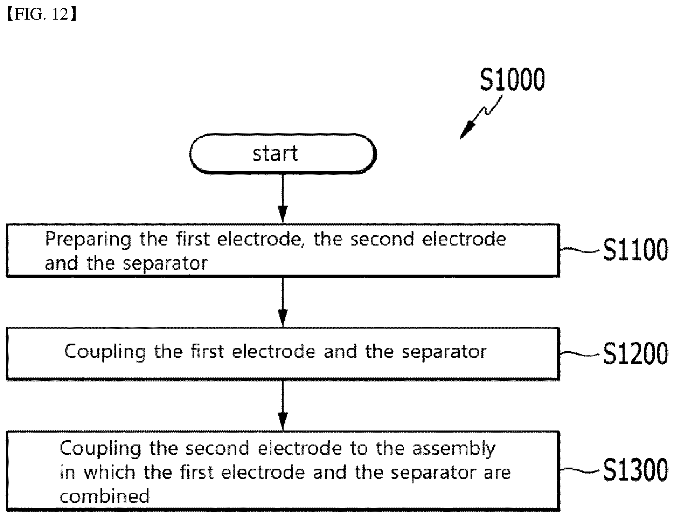

Fig. 12 is a flowchart of a method of manufacturing an electrode assembly according to one embodiment of the present disclosure.

Referring to Fig. 12, the preparation method (S1000) of the electrode assembly of the present embodiment may include:
a step of preparing the first electrode 110, the second electrode 120 and the separator 130 (S1100),
a step of coupling the first electrode 110 and the separator 130 (S1200), and
a step of coupling the second electrode 120 to the assembly in which the first electrode 110 and the separator 130 are combined (S1300).

The preparing step (S1100) may include a step of preparing the first electrode 110 as a rectangular sheet, a step of preparing the separator 130 in the form of a rectangular sheet, and a step of preparing the second electrode 120 in the form of a sheet cut into a predetermined size.

Here, the first electrode 110 may include a plurality of first coating portions 113 and a first non-coating portion 111 formed therebetween, and the second electrode 120 may include two second coating portions 123 and a second non-coating portion 121 formed therebetween. The separator 130 may include a plurality of unit separators 133. The first electrode 110, the second electrode 120, and the separator 130 prepared through the preparing step (S1100) can be explained with reference to the drawings of Figs. 3 to 5, and thus, a detailed description thereof will be omitted.

The step of coupling the first electrode 110 and the separator 130 (S1200) can be explained with reference to the drawings of Figs. 6 to 8 mentioned above. Here, the coupling step (S1200) may include a step of arranging two unit separators 130 overlapping each other between the two overlapping first coating portions 113, and by repeating the above steps, an assembly in which the first electrode 110 and the separator 130 are combined can be formed. Further, here, the first electrode 110 and the separator 130 can be vertically coupled so that the long sides a1, a3 and short sides b1, b3 of the first coating portion 113 and the unit separator 133 correspond to each other.

The step of coupling the second electrode 120 to the assembly in which the first electrode 110 and the separator 130 are combined (S1300) can be explained with reference to the drawings of Figs. 9 to 11 mentioned above.

Here, the step of coupling the second electrode 120 (S1300) may include a step of arranging the second coating portion 123 of the second electrode 120 between two unit separators 130 overlapping each other, and by repeating the above steps, the electrode assembly 100 of the present disclosure can be formed. Further, here, the first electrode 110 and the second electrode 120 can be vertically coupled so that the long sides a1, a2, a3 and short sides b1, b2, b3 of the first coating portion 113, the second coating portion 123 and the unit separator 133 correspond to each other.

In this manner, the manufacturing method of the electrode assembly 100 of the present embodiment does not cut the first electrode 110, the second electrode 120, and the separator 130 into unit sizes, thereby capable of simplifying the entire process. In addition, the first coating portion 113 and the second coating portion 123 can connect through the first non-coating portion 111 and the second non-coating portion 121, thereby preparing the electrode assembly 100 having a high output.

Meanwhile, the electrode assembly 100 of the present embodiment described above may be stored in a cell case together with an electrolyte solution and provided as a battery cell.

A battery cell according to one embodiment of the present disclosure may include an electrode assembly 100 in which a plurality of electrodes and a plurality of separators are alternately stacked, electrode leads that are connected to electrode tabs extending from a plurality of electrodes, and a cell case that seals the electrode assembly in a state where one end of the electrode lead protrudes.

Meanwhile, the above-mentioned battery cell can be stacked in one direction to form a battery cell stack, and a battery pack can be formed together with a battery management system (BMS) and/or a cooling device that is modularized into a battery module and manages the temperature or voltage of the battery. The battery pack can be applied to various devices. For example, the device to which the battery pack is applied may be a vehicle means such as an electric bicycle, an electric vehicle, or a hybrid vehicle, but the present disclosure is not limited thereto, and the battery pack according to the present embodiment can be used for various devices in addition to the above illustrations, which also falls within the scope of the present disclosure.

Although preferred embodiments of the present disclosure have been described in detail above, the scope of the present disclosure is not limited thereto, and various modifications and improvements made by those skilled in the art using the basic concepts of the present disclosure as defined in the appended claims, also falls within the scope of the present disclosure. The scope of the invention however is defined by the attached claims.

### [Description of Reference Numerals]

100: electrode assembly
110: first electrode
111: first non-coating portion
113: first coating portion
120: second electrode
121: second non-coating portion
123: second coating portion
130: separator
133 unit separator.

### [Industrial Applicability]

According to embodiments, the electrode assembly of the present disclosure and a battery cell including the same can simplify the preparation process and form bidirectional electrode tabs by applying a novel laminated structure to the electrode assembly.

The effects of the present disclosure are not limited to the effects mentioned above and additional other effects not described above will be clearly understood from the description of the appended claims by those skilled in the art.

## Claims

1. An electrode assembly (100) comprising a positive electrode, a negative electrode and a separator (130),
wherein the positive electrode and the negative electrode comprise a coating portion (113, 123) coated with an electrode active material and a non-coating portion (111, 121) not coated with an electrode active material respectively,
wherein either the positive electrode or the negative electrode has a zigzag shape formed by bending a rectangular sheet in which the coating portion (113) and the non-coating portion (111) are alternately formed, and the non-coating portion (111) forms electrode tabs,
wherein the electrode (120) which has not the zigzag shape has a folder shape formed by bending a sheet in which two coating portions (123) are formed with one non-coating portion (121) interposed therebetween, and the non-coating portion (121) forms electrode tabs,
wherein the electrode tabs of the zigzag-shaped electrodes are formed in both directions, and
wherein the electrode tabs of the folder-shaped electrodes are formed in one direction and arranged perpendicular to the electrode tabs formed in both directions.

2. The electrode assembly (100) according to claim 1, wherein:
the separator (130) has a zigzag shape formed by bending a rectangular separator sheet in accordance with a predetermined unit length.

3. The electrode assembly (100) according to claim 2, wherein:
the zigzag-shaped electrode (110) and separator (130) have a folding line formed by being bent,
the folding line of the zigzag-shaped electrode (110) is formed on the non-coating portion (111), and
the folding line of the zigzag-shaped electrode (110) is arranged perpendicular to the folding line of the separator (130).

4. The electrode assembly (100) according to claim 3, wherein:
the folding line formed on the folder-shaped electrode (120) is arranged parallel to the folding line of the separator (130).

5. The electrode assembly (110) according to claim 1, wherein:
two unit separators (133) are located between the two coating portions (113) of the zigzag-shaped electrode (110), and two other unit separators (133) are located between the other two coating portions (113) of the zigzag shaped electrode (110),
one of the two coating portions (123) of the folder-shaped electrode (120) is located between the two unit separators (133), and
the other of the two coating portions (123) of the folder-shaped electrode (120) is located between the other two unit separators (133).

6. The electrode assembly (100) according to claim 1, wherein:
the coating portion has a long side (a1, a2, a3) facing each other and a short side (b1, b2, b3) facing each other,
the non-coating portion (111) of the zigzag-shaped electrode (110) is located between the long sides (a1) of the coating portion (113), and
the non-coating portion (121) of the folder-shaped electrode (120) is located between short sides (b2) of the coating portion (123).

7. The electrode assembly (100) according to claim 1, wherein:
the coating portion has a long side (a1, a2, a3) facing each other and a short side (b1, b2, b3) facing each other, and
the non-coating portion (111) of the zigzag-shaped electrode (110) is located between the long sides (a1) of the coating portion (113).

8. The electrode assembly according to claim 2, wherein:
the bent portion of the separator (130) is located between short sides (b3) of the separator (130).

9. The electrode assembly according to claim 1, wherein:
the zigzag-shaped electrode (110) is a positive electrode.

10. The electrode assembly according to claim 1, wherein:
the folder-shaped electrode (120) is a negative electrode.

11. The electrode assembly according to claim 1, wherein:
the coating portion (113, 123) of the electrode is formed on both surfaces.

12. The electrode assembly according to claim 1, wherein:
the coating portion (113, 123) of the electrode has a shape in which four sides have the same length.

13. A battery cell comprising the electrode assembly as set forth in claim 1.

## Patentansprüche

1. Elektrodenanordnung (100), umfassend eine positive Elektrode, eine negative Elektrode und einen Separator (130),
• wobei die positive Elektrode und die negative Elektrode jeweils einen Beschichtungsabschnitt (113, 123), der mit einem aktiven Elektrodenmaterial beschichtet ist, und einen Nichtbeschichtungsabschnitt (111, 121), der nicht mit einem aktiven Elektrodenmaterial beschichtet ist, umfassen,
• wobei entweder die positive Elektrode oder die negative Elektrode eine Zickzackform aufweist, die durch Biegen einer rechteckigen Bahn gebildet wird, in welcher der Beschichtungsabschnitt (113) und der Nichtbeschichtungsabschnitt (111) abwechselnd ausgebildet sind, und der Nichtbeschichtungsabschnitt (111) Elektrodenfahnen bildet,
• wobei die Elektrode (120), welche nicht die Zickzackform aufweist, eine Mappenform aufweist, die durch Biegen einer Bahn gebildet wird, in der zwei Beschichtungsabschnitte (123) mit einem dazwischen angeordneten Nichtbeschichtungsabschnitt (121) ausgebildet sind, und der Nichtbeschichtungsabschnitt (121) Elektrodenfahnen bildet,
• wobei die Elektrodenfahnen der zickzackförmigen Elektroden in beiden Richtungen ausgebildet sind, und
• wobei die Elektrodenfahnen der mappenförmigen Elektroden in einer Richtung ausgebildet und senkrecht zu den in beiden Richtungen ausgebildeten Elektrodenfahnen angeordnet sind.

2. Elektrodenanordnung (100) nach Anspruch 1, wobei:
• der Separator (130) eine Zickzackform aufweist, die durch Biegen einer rechteckigen Separatorbahn gemäß einer vorbestimmten Einheitslänge gebildet wird.

3. Elektrodenanordnung (100) nach Anspruch 2, wobei:
• die zickzackförmige Elektrode (110) und der Separator (130) eine durch Biegen gebildete Faltlinie aufweisen,
• die Faltlinie der zickzackförmigen Elektrode (110) auf dem Nichtbeschichtungsabschnitt (111) ausgebildet ist, und
• die Faltlinie der zickzackförmigen Elektrode (110) senkrecht zur Faltlinie des Separators (130) angeordnet ist.

4. Elektrodenanordnung (100) nach Anspruch 3, wobei:
• die auf der mappenförmigen Elektrode (120) ausgebildete Faltlinie parallel zur Faltlinie des Separators (130) angeordnet ist.

5. Elektrodenanordnung (110) nach Anspruch 1, wobei:
• zwei Einheitsseparatoren (133) sich zwischen den zwei Beschichtungsabschnitten (113) der zickzackförmigen Elektrode (110) befinden und zwei andere Einheitsseparatoren (133) sich zwischen den anderen zwei Beschichtungsabschnitten (113) der zickzackförmigen Elektrode (110) befinden,
• einer der zwei Beschichtungsabschnitte (123) der mappenförmigen Elektrode (120) sich zwischen den zwei Einheitsseparatoren (133) befindet, und
• der andere der zwei Beschichtungsabschnitte (123) der mappenförmigen Elektrode (120) sich zwischen den anderen zwei Einheitsseparatoren (133) befindet.

6. Elektrodenanordnung (100) nach Anspruch 1, wobei:
• der Beschichtungsabschnitt lange Seiten (a1, a2, a3), die einander gegenüberliegen, und kurze Seiten (b1, b2, b3), die einander gegenüberliegen, aufweist,
• der Nichtbeschichtungsabschnitt (111) der zickzackförmigen Elektrode (110) sich zwischen den langen Seiten (a1) des Beschichtungsabschnitts (113) befindet, und
• der Nichtbeschichtungsabschnitt (121) der mappenförmigen Elektrode (120) sich zwischen kurzen Seiten (b2) des Beschichtungsabschnitts (123) befindet.

7. Elektrodenanordnung (100) nach Anspruch 1, wobei:
• der Beschichtungsabschnitt lange Seiten (a1, a2, a3), die einander gegenüberliegen, und kurze Seiten (b1, b2, b3), die einander gegenüberliegen, aufweist, und
• der Nichtbeschichtungsabschnitt (111) der zickzackförmigen Elektrode (110) sich zwischen den langen Seiten (a1) des Beschichtungsabschnitts (113) befindet.

8. Elektrodenanordnung nach Anspruch 2, wobei:
• der gebogene Abschnitt des Separators (130) sich zwischen kurzen Seiten (b3) des Separators (130) befindet.

9. Elektrodenanordnung nach Anspruch 1, wobei:
• die zickzackförmige Elektrode (110) eine positive Elektrode ist.

10. Elektrodenanordnung nach Anspruch 1, wobei:
• die mappenförmige Elektrode (120) eine negative Elektrode ist.

11. Elektrodenanordnung nach Anspruch 1, wobei:
• der Beschichtungsabschnitt (113, 123) der Elektrode auf beiden Oberflächen ausgebildet ist.

12. Elektrodenanordnung nach Anspruch 1, wobei:
• der Beschichtungsabschnitt (113, 123) der Elektrode eine Form aufweist, in der vier Seiten die gleiche Länge haben.

13. Batteriezelle, umfassend die Elektrodenanordnung nach Anspruch 1.

## Revendications

1. Un ensemble électrode (100) comprenant une électrode positive, une électrode négative et un séparateur (130),
• dans lequel l'électrode positive et l'électrode négative comprennent respectivement une partie de revêtement (113, 123) revêtue d'un matériau actif d'électrode et une partie de non-revêtement (111, 121) non revêtue d'un matériau actif d'électrode,
• dans lequel soit l'électrode positive, soit l'électrode négative présente une forme de zigzag formée en pliant une feuille rectangulaire dans laquelle la partie de revêtement (113) et la partie de non-revêtement (111) sont formées de manière alternée, et la partie de non-revêtement (111) forme des languettes d'électrode,
• dans lequel l'électrode (120) qui ne présente pas la forme de zigzag présente une forme de dossier formée en pliant une feuille dans laquelle deux parties de revêtement (123) sont formées avec une partie de non-revêtement (121) interposée entre elles, et la partie de non-revêtement (121) forme des languettes d'électrode,
• dans lequel les languettes d'électrode des électrodes en forme de zigzag sont formées dans les deux directions, et
• dans lequel les languettes d'électrode des électrodes en forme de dossier sont formées dans une direction et disposées perpendiculairement aux languettes d'électrode formées dans les deux directions.

2. L'ensemble électrode (100) selon la revendication 1, dans lequel :
• le séparateur (130) présente une forme de zigzag formée en pliant une feuille de séparateur rectangulaire selon une longueur unitaire prédéterminée.

3. L'ensemble électrode (100) selon la revendication 2, dans lequel :
• l'électrode en forme de zigzag (110) et le séparateur (130) présentent une ligne de pliage formée par pliage,
• la ligne de pliage de l'électrode en forme de zigzag (110) est formée sur la partie de non-revêtement (111), et
• la ligne de pliage de l'électrode en forme de zigzag (110) est disposée perpendiculairement à la ligne de pliage du séparateur (130).

4. L'ensemble électrode (100) selon la revendication 3, dans lequel :
• la ligne de pliage formée sur l'électrode en forme de dossier (120) est disposée parallèlement à la ligne de pliage du séparateur (130).

5. L'ensemble électrode (110) selon la revendication 1, dans lequel :
• deux séparateurs unitaires (133) sont situés entre les deux parties de revêtement (113) de l'électrode en forme de zigzag (110), et deux autres séparateurs unitaires (133) sont situés entre les deux autres parties de revêtement (113) de l'électrode en forme de zigzag (110),
• l'une des deux parties de revêtement (123) de l'électrode en forme de dossier (120) est située entre les deux séparateurs unitaires (133), et
• l'autre des deux parties de revêtement (123) de l'électrode en forme de dossier (120) est située entre les deux autres séparateurs unitaires (133).

6. L'ensemble électrode (100) selon la revendication 1, dans lequel :
• la partie de revêtement présente de grands côtés (a1, a2, a3) se faisant face et de petits côtés (b1, b2, b3) se faisant face,
• la partie de non-revêtement (111) de l'électrode en forme de zigzag (110) est située entre les grands côtés (a1) de la partie de revêtement (113), et
• la partie de non-revêtement (121) de l'électrode en forme de dossier (120) est située entre les petits côtés (b2) de la partie de revêtement (123).

7. L'ensemble électrode (100) selon la revendication 1, dans lequel :
• la partie de revêtement présente de grands côtés (a1, a2, a3) se faisant face et de petits côtés (b1, b2, b3) se faisant face, et
• la partie de non-revêtement (111) de l'électrode en forme de zigzag (110) est située entre les grands côtés (a1) de la partie de revêtement (113).

8. L'ensemble électrode selon la revendication 2, dans lequel :
• la partie pliée du séparateur (130) est située entre les petits côtés (b3) du séparateur (130).

9. L'ensemble électrode selon la revendication 1, dans lequel :
• l'électrode en forme de zigzag (110) est une électrode positive.

10. L'ensemble électrode selon la revendication 1, dans lequel :
• l'électrode en forme de dossier (120) est une électrode négative.

11. L'ensemble électrode selon la revendication 1, dans lequel :
• la partie de revêtement (113, 123) de l'électrode est formée sur les deux surfaces.

12. L'ensemble électrode selon la revendication 1, dans lequel :
• la partie de revêtement (113, 123) de l'électrode présente une forme dans laquelle quatre côtés ont la même longueur.

13. Un élément de batterie comprenant l'ensemble électrode selon la revendication 1.
